# EUROPÄISCHE PATENTANMELDUNG

(11) **EP 0 937 563 A1**
(43) Veröffentlichungstag der Anmeldung: **25.08.1999**
(21) Anmeldenummer: 99103255.8
(22) Anmeldetag: 19.02.1999
(51) Int. Cl.: B29C 41/08, B29C 44/00, C08G 18/08

(54) **Verfahren zur Herstellung von Häuten aus Polyurethandispersionen**

(30) Priorität: 24.02.1998 DE 19807754
(71) Anmelder: BASF AKTIENGESELLSCHAFT, 67056 Ludwigshafen (DE)
(72) Erfinder: Tintelnot, Dieter, 49356 Diepholz (DE); Frei, Hans-Peter, 82223 Eichenau (DE); Hitschfeld, Klaus, 49448 Lemförde (DE); Bartz, Thomas Dr., 82140 Olching (DE)

(57) **Zusammenfassung**

Verfahren zur Herstellung von Häuten aus Polyurethandispersionen, wobei man
I. eine Form mit einer wässerige Dispersion, enthaltend ein Polyurethan (A), flächig beschichtet, wobei die Form auf ihrer Oberfläche keinen Elektrolyten trägt, der die Koagulation der wässerigen Dispersion, enthaltend ein Polyurethan (A), bewirken würde,
II. den gemäß Schritt (I) hergestellten Film der wässerigen Dispersion, enthaltend ein Polyurethan (A) trocknet, wobei eine einschichtige Haut gebildet wird,
III.gegebenenfalls eine aus mehreren Hautschichten aufgebaut Haut herstellt, indem man die gemäß Schritt II erhaltene mit einer einschichtigen Haut bekleidete Form erneut mit einer wässerige Dispersion, enthaltend ein Polyurethan (A), flächig beschichtet,
IV. den in Schritt (III) neu gebildeten Film der wässerigen Dispersion, enthaltend ein Polyurethan (A), zu einer weiteren Hautschicht trocknet und
V. gegebenenfalls die Schritte (III) und (IV) 5 bis 50 Male wiederholt.

## Beschreibung

Die vorliegende Erfindung betrifft Verfahren zur Herstellung von Häuten aus Polyurethandispersionen, wobei man
I. eine Form mit einer wässerige Dispersion, enthaltend ein Polyurethan (A), flächig beschichtet, wobei die Form auf ihrer Oberfläche keinen Elektrolyten trägt, der die Koagulation der wässerigen Dispersion, enthaltend ein Polyurethan (A), bewirken würde,
II. den gemäß Schritt (I) hergestellten Film der wässerigen Dispersion, enthaltend ein Polyurethan (A) trocknet, wobei eine einschichtige Haut gebildet wird,
III.gegebenenfalls eine aus mehreren Hautschichten aufgebaut Haut herstellt, indem man die gemäß Schritt II erhaltene mit einer einschichtigen Haut bekleidete Form erneut mit einer wässerige Dispersion, enthaltend ein Polyurethan (A), flächig beschichtet,
IV. den in Schritt (III) neu gebildeten Film der wässerigen Dispersion, enthaltend ein Polyurethan (A), zu einer weiteren Hautschicht trocknet und
V. gegebenenfalls die Schritte (III) und (IV) 5 bis 50 Male wiederholt.

Häute aus Polyurethandispersion sind beispielsweise aus der JP-A S63-256409 bekannt. Nach der dortigen Lehre werden die Häute hergestellt, indem man eine mit Salz benetzte Form in eine Polyurethandispersion taucht und den dabei gebildeten Film anschließend thermisch härtet. Die solchermaßen hergestellten Häute können hinterschäumt und beispielsweise für den Innenausbau von Automobilen verwendet werden. Nachteilig an diesem Verfahren ist, daß die Form vor jedem Verarbeitungsschritt mit einem Salz beschichtet werden muß. Dieses Verfahren ist relativ umständlich, da die Form in einem separaten Arbeitsschritt mit einem Salz beschichtet werden muß.

Aus der nicht vorveröffentlichten DE-A-19708451 ist die Herstellung dünnwandiger elastischer Formkörper bekannt. Hierbei wird so vorgegangen, daß man auf der Oberfläche einer Form eine Schicht eines Elektrolyten erzeugt, die Form in eine Polyurethandispersion taucht, die Polyurethandispersion auf der Oberfläche koaguliert, die dabei erzeugte Schicht aus koagulierten Polyurethanteilchen gegebenenfalls wäscht und härtet und die dabei gebildeten Formkörper von der Form abzieht.

Aus der EP-A-0257225 ist bekannt, daß man wärmesensible Polyurethandispersionen wärmekoaguliert und auf diese Weise Hohlkörper herstellt. Diese Dispersionen bestehen aus einem beispielsweise mit ionischen Gruppen hydrophil modifizierten Polyurethan, wasserlöslichen Polyetherpolyurethanen wie sie beispielsweise in der DE-A 2516979, 2534304 und 3330197 beschrieben sind und einem Elektrolyt, z.B. einem Metallsalz.

Aufgabe der vorliegenden Erfindung war es, ein Verfahren zur Herstellung von Häuten aus wässerigen Dispersionen, enthaltend ein Polyurethan zu finden, welches die Nachteile der Verfahren des Standes der Technik nicht aufweist.

Demgemäß wurde das eingangs beschriebene Verfahren gefunden.

Bei den Formen, die in Schritt (I) mit einer wässerige Dispersion des Polyurethans (A) flächig beschichtet werden, handelt es sich um solche, wie sie im allgemeinen für die Herstellung von Automobilinnenteilen wie Armaturentafeln, Türseitenverkleidungen und Säulenverkleidungen üblich sind. Derartige Formen sind beispielsweise in der WO 93/23237 und JP-A-S63-256409 beschrieben. Bevorzugt weisen die Formen Oberflächenstrukturen auf, mit denen auf den hiermit gebildeten Häuten Oberflächenstrukturen, die denen des Leders gleichen (z.B. Narbungen), abgebildet werden. Weiterhin weisen die Formen bevorzugt konvexe und/oder konkave Oberfächenprofile auf, so daß die hierin gebildeten Häute Oberflächenprofile aufweisen, wie sie bei Automobilinnenteilen, wie Armaturentafeln, Türseitenverkleidungen oder Säulenverkleidungen üblich ist.

Die Oberflächen der Formen, auf die die wässerigen Dispersion des Polyurethans (A) aufgetragen werden, weisen keine Beschichtung mit einem Salz oder Elektrolyten auf, die eine Koagulation der wässerigen Dispersion des Polyurethans (A) bewirken würde.

Eine spezielle Vorbehandlung der Oberflächen zur Reinigung von Spuren von anhaftenden Elektrolytmengen erübrigt sich im allgemeinen, da Spuren von Elektrolyten für eine Koagulation der Polyurethandispersionen nicht ausreichen. So reicht es beispielsweise aus, die Oberfläche der Formen von ihrem ersten Gebrauch so zu reinigen, wie es beim allgemein bekannten RIM-Verfahren (Reaction Injection Moulding) unter Anwendung eines konventionellen 2-Komponenten-Polyurethansystems allgemein üblich ist. Beispielsweise wäscht man die Oberfläche der Form vor ihrem 1. Einsatz mit einer wäßrigen Lösung, die ein übliches Detergenz enthält, spült mit Leitungswasser nach und trocknet die Form. Nachdem die erste Haut nach dem erfindungsgemäßen Verfahren hergestellt und der Form entnommen wurde, erübrigt sich im allgemeinen eine Reinigung, bevor die Form zur Herstellung nächsten Haut erneut mit der Polyurethandispersion beschichtet wird.

Um das Entnehmen der fertigen Haut aus der Form zu erleichtern, benetzt man die Formoberfläche vor der Beschichtung mit der Polyurethandispersion mit einem handelsüblichen Trennmittel, beispielsweise einer Dispersion von Wachsen in Trägerölen mit und ohne Silikonadditiven.

Als Auftragsverfahren eignen sich alle bekannten Verfahren, z.B. das Tauchen. Bevorzugt werden die wässerigen Dispersion des Polyurethans (A) auf die Form gesprüht. Hierzu eignen sich die allgemein bekannten Sprühpistolen, wie sie beispielsweise bei der Lackierung Verwendung finden.

Schritt (I) läßt sich besonders effizient durchführen, indem man die wässerigen Dispersion des Polyurethans (A) unmittelbar vor dem Aufsprühen erhitzt, beispielsweise indem man die Dispersionen mit unter Druck stehendem heißen Wasserdampf versprüht. Geeignete Apparate sind beispielsweise in der EP-A-0291850 beschrieben. Auf diese Weise läßt sich die Trocknung des so auf die Form aufgebrachten Dispersionsfilms verkürzen.

Die Trocknung des gemäß Schritt (I) hergestellten Dispersionsfilms erfolgt bevorzugt, indem man die Formoberfläche auf Temperaturen von 20 bis 150, bevorzugt 50 bis 80°C aufheizt. Bei diesen Temperaturen reichen für die Trocknung Zeiten von 0,5 bis 5 min. Die Trocknung ist im allgemeinen abgeschlossen, wenn die gebildete Hautschicht weniger als 1 Gew.-% Wasser enthält.

Üblicherweise erfolgt der flächige Auftrag der wässerigen Dispersion des Polyurethans (A) in solchen Mengen, daß nach der einmaligen Durchführung von Schritt (I) und (II) eine einschichtige Haut mit einer Dicke von 10 µm bis 2 mm entsteht.

Insbesondere wenn dickere Häute gewünscht werden, können auf den ersten Beschichtungs- und Trocknungsschritt (Schritt I und II) weitere folgen, sodaß eine aus mehreren Hautschichten aufgebaute Haut entsteht.

Hierzu wird
III.in Schritt (III) die gemäß Schritt (II) erhaltene mit einer Haut bekleidete Form erneut mit einer wässerige Dispersion, enthaltend ein Polyurethan (A), flächig beschichtet, und
IV. der in Schritt (III) neu gebildeten Film der wässerigen Dispersion, enthaltend ein Polyurethan (A), zu einer weiteren Hautschicht getrocknet und
V. die Schritte (III) und (IV) gegebenenfalls alternierend wiederholt, bis die gewünschte Schichtdicke der Haut erreicht ist.

Im allgemeinen reicht es aus, die Schritte (III) und (IV) 5 bis 50, bevorzugt 10 bis 50 Male zu wiederholen, um eine Haut mit einer Schichtdicke von etwa 1mm besonders effizient herzustellen.

Für die Durchführung der Schritte (III) und (IV) gilt sinngemäß das für die Schritte (I) und (II) Gesagte.

Bevorzugt weisen die Häute eine Oberflächenhärte von Shore A 55 bis Shore D 80, ermittelt nach DIN 5305 auf.

Für die Herstellung der Häute eignen sich insbesondere solche wässerigen Dispersionen, enthaltend ein Polyurethan (A), bei denen das Polyurethan aufgebaut ist aus
a) Diisocyanaten mit 4 bis 30 C-Atomen,
b) Diolen, von denen
   b1) 10 bis 100 mol-%, bezogen auf die Gesamtmenge der Diole (b), ein Molekulargewicht von 500 bis 5000 aufweisen, und
   b2) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppen, bei der es sich um eine alkoholische Hydroxylgruppe, eine primäre oder sekundäre Aminogruppen oder eine Isocyanatgruppe handelt.

Als Monomere (a) kommen die üblicherweise in der Polyurethanchemie eingesetzten aliphatischen oder aromatischen Diisocyanate in Betracht. Bevorzugt sind die Monomere (a) oder deren Mischungen, die auch als Monomere (a) in der DE-A-19521500 erwähnt sind.

Als Monomere (b) und (d) kommen bevorzugt die in der DE-A-19521500 als Monomere (b) und (d) genannten in Betracht.

Monomere b1 sind beispielsweise Polyester- oder Polyetherdiole.

Bei den Monomeren b2 handelt es sich beispielsweise um aliphatische Diole mit 2 bis 12 C-Atomen, z.B. 1,4-Butandiol oder 1,6-Hexandiol.

Als Monomere (d) sind beispielsweise aliphatische Amine mit 2 bis 12 C-Atomen und 2 bis 4 Gruppen, ausgewählt aus der Gruppe der primären oder sekundären Aminogruppen, geeignet. Beispiele sind Ethylendiamin, Isophorondiamin oder Diethylentriamin.

Um die Wasserdispergierbarkeit der Polyurethane zu erreichen, sind die Polyurethane neben den Komponenten (a), (b) und (d) aus von den Komponenten (a), (b) und (d) verschiedenen Monomere (c), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Bevorzugte Monomere (c) sind ebenfalls die in der DE-A-19521500 als Monomere (c) bezeichneten.

Der Anteil der Komponenten mit (potentiell) hydrophilen Gruppen an der Gesamtmenge der Komponenten (a), (b), (c), (d) und (e) wird im allgemeinen so bemessen, daß die Molmenge der (potentiell) hydrophilen Gruppen, bezogen auf die Gewichtsmenge aller Monomere (a) bis (e), 80 bis 1200, bevorzugt 140 bis 1000 und besonders bevorzugt 200 bis 800 mmol/kg beträgt.

Bei den (potentiell) hydrophilen Gruppen kann es sich um nichtionische, z.B. Polyethylenoxidgruppen oder bevorzugt um (potentiell) ionische hydrophile Gruppen, z.B. Carboxylat- oder Sulfonat-Gruppen handeln. Bevorzugt wird ohne wirksame Mengen an nichtionische Gruppen gearbeitet

Der Gehalt an nichtionischen hydrophilen Gruppen, falls solche eingebaut werden, beträgt im allgemeinen bis 5, bevorzugt bis 3, besonders bevorzugt bis 1 Gew.-%, bezogen auf die Gewichtsmenge aller Monomere (a) bis (e).

Monomere (e), die gegebenenfalls mitverwendet werden, sind Monoisocyanate, Monoalkohole und mono-primäre und sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie Carbonylgruppen und dienen zur Einführung von funktionellen Gruppen in das Polyurethan, die die Dispergierung bzw. die Vernetzung oder weitere polymeranaloge Umsetzung des Polyurethans ermöglichen.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a) bis (e) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Weiterhin wird der Anteil der Monomere (a) bevorzugt so gewählt, daß der Anteil der Monomere (a) an den Monomeren (a) bis (e) 20 bis 70 Gew.-% beträgt.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (e) erfolgt im allgemeinen bei Reaktionstemperaturen von 20 bis 180°C, bevorzugt 50 bis 150°C unter Normaldruck oder unter autogenem Druck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet werden.

Als Polymerisationsapparate kommen Rührkessel oder die sonst üblichen Polymerisationsapparate in Betracht.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Meistens werden die Dispersionen nach einem der folgenden Verfahren hergestellt:
Nach dem "Acetonverfahren" wird in einem mit Wasser mischbaren und bei Normaldruck unter 100°C siedenden Lösungsmittel aus den Komponenten (a) bis (c) ein ionisches Polyurethan hergestellt. Es wird soviel Wasser zugegeben, bis sich eine Dispersion bildet, in der Wasser die kohärente Phase darstellt.

Das "Präpolymer-Mischverfahren" unterscheidet sich vom Acetonverfahren darin, daß nicht ein ausreagiertes (potentiell) ionisches Polyurethan, sondern zunächst ein Präpolymer hergestellt wird, das Isocyanat-Gruppen trägt. Die Komponenten werden hierbei so gewählt, daß das definitionsgemäße Verhältnis A:B größer 1,0 bis 3, bevorzugt 1,05 bis 1,5 beträgt. Das Präpolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanatgruppen der Präpolymere unter Kettenverlängerung abreagieren.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% und sind besonders bevorzugt frei von Lösungsmitteln.

Besonders bevorzugte Dispersionen sind beispielsweise in der DE-A-2645779 und DE-A-2651506 sowie der EP-A-0300335 beschrieben. Bevorzugte Handelsprodukte sind Astacin® Finish PUD oder PUM der Fa. BASF Aktiengesellschaft.

Bevorzugt enthalten die Dispersionen keine Stoffe, mit denen die Dispersionen üblicherweise zu wärmekoagulierbaren Dispersionen modifiziert werden, also solche Stoffe, wie sie in der EP-A-0257225 beschrieben sind. Die Dispersionen, wie sie im erfindungsgemäßen Verfahren eingesetzt werden, enthalten also bevorzugt keine wirksamen Mengen an wasserlöslichen Polyetherpolyurethanen wie sie beispielsweise in der DE-A 2516979, 2534304 und 3330197 beschrieben sind oder die in der EP-A-0257225 genannten Elektrolyte (Metallsalze).

Die erfindungsgemäßen Dispersionen können handelsübliche Hilfs- und Zusatzstoffe wie Netzmittel, Entschäumer, Mattierungsmittel, Emulgatoren, Verdickungsmittel und Thixotropiermittel, Farbmittel wie Farbstoffe und Pigmente enthalten.

Die erfindungsgemäßen Häute werden üblicherweise hinterschäumt. Das Hinterschäumen kann in der Form erfolgen, in der die Häute hergestellt wurden oder die Häute werden dieser Form entnommen und für diesen Arbeitsschritt in eine andere Form plaziert, die sich für die Expansion von Polyurethan eignet.

Üblicherweise erfolgt das Aufbringen des Polyurethanschaumes (B) auf der Seite der Haut, die nicht mit der Form in Kontakt stand.

Die Herstellung der Schäume ist allgemein bekannt.

Das Aufbringen des Polyurethanschaumes (B) erfolgt zweckmäßigerweise, indem man eine Polyurethan-Reaktionsmischung, enthaltend ein Treibmittel, auf die Hautoberfläche aufsprüht oder gießt.

Im allgemeinen weist der Polyurethanschaum (B) eine Dicke von 1 bis 10, bevorzugt 1 bis 7, besonders bevorzugt 2 bis 3 mm auf. Bevorzugt handelt es sich bei dem Polyurethanschaum (B) um einen offenzelligen halbharten Schaum.

Bei der Isocyanat-Komponente handelt es sich beispielsweise um solche die auch als Monomere (a) für die Herstellung der wässerigen Dispersion, enthaltend ein Polyurethan (A) in Betracht kommen. Besonders bevorzugt ist Roh-MDI (Diisocyanato-diphenylmethan) (z.B. Lupranat® M20 der Fa. BASF Aktiengesellschaft)

Als Polyol-Komponente kommen ebenfalls diejenigen in Betracht, die als Monomere (a) für die Herstellung der wässerigen Dispersion, enthaltend ein Polyurethan (A) in Betracht kommen.

Als Treibmittel kann Wasser dienen.

Besonders bevorzugt sind wassergetriebene Polyäther-Systeme mit einer Dichte von 50 bis 180 kg/m³. Insbesondere eignen sich für die Herstellung des Polyurethanschaurns ein handelsübliches System zur Erzeugung von Halbhart-Schäumen wie beispielsweise die Elastoflex® E-Systeme (Handelsprodukt der Fa. Elastogran GmbH, Lemförde).

Für die Hinterschäumung der Häute geeignete Formen und Auftragsverfahren sind beispielsweise in der WO 93/23237 und JP A-S63-256409 beschrieben.

Gegebenenfalls werden die Häute, insbesondere wenn das Polyurethan (A) überwiegend aus aromatischen Isocyanaten als Monomore (a) aufgebaut ist, mit einem IMP-Lack zur Stabilisierung gegen UV-Strahlung oder mit einem anderen üblichen Lack beschichtet. IMP-Lacke sind handelsübliche 2-Komponenten-Systeme. Die Komponente 1 enthält beispielsweise eine Lösung eines PolyurethanHarzes, das neben Alkohol übliche organische Lösungsmittel wie beispielsweise aromatische Kohlenwasserstoffe und Ester (z.B. Xylole, N-Butylacetat oder 1-Methoxy-propylacetat-2) enthält. Als Komponente 2 (Härterkomponente) kommen beispielsweise aliphatische Isocyanate in Betracht. IMP-Lacke werden beispielsweise von der Fa. ISL-Chemie GmbH, Kürten als 2-Komponenten-System unter den Handelsnamen Isothan-TMP-2K-Lack und Isothan-Härter.

Die auf diese Weise hergestellten Häute eignen sich insbesondere als Automobilinnenteile, wie Armaturentafeln, Türseitenverkleidungen oder Säulenverkleidungen.

### Experimenteller Teil

### Beispiel A:

Im ersten Schritt wurde die offene Form in der Weise vorbereitet, daß mit einem Temperiergerät die Formoberfläche auf eine Temperatur von 75 + 5°C gebracht wurde. Dann wurde die zu besprühende Fläche der Instrumententafel mit einer Wachsdispersion in einem Trägeröl als Trennmittel versehen, Acmosil® 56-4566 (Fa. Acmos Chemie, Bremen) oder Bomix® 6389/8 (Fa. Böttler, Telgte).

Astacin Finish PUM der BASF AG, eine Polyurethandispersion aus einem anionische Gruppen tragenden Polyurethan aus Polyesterdiol und aliphatischen Isocyanaten wurde mit 10 % Farbe, BASF-Lepton blau, versetzt und in einen Druckbehälter für die Sprühpistole gefüllt. Der Spritzapparat vom Typ HS-25 ist von der Fa. Krautzberger GmbH, Eltville a.R., mit einer Mini-Verlängerung 90°C - für VD-Düsen - damit wurden die Hinterschneidungen in kleiner Leistung, ca. 10-20 mµ pro Sprühvorgang, mehrere Male besprüht. Für die größeren Flächen wurde ein Spritzapparat des Typs Perfekt HS-25, A 10 mit größerer Leistung, ca. 30 - 50 mµ pro Sprühvorgang, eingesetzt. Diese beiden Sprühvorgänge wurden sooft wiederholt, bis eine Haut von ca. 0,9 + 0,3 mm entstanden war. Zwischen den Sprühvorgängen wurde solange gewartet, bis das Wasser vollständig verdampft war. Die fertige Haut wurde durch Oberflächenwärme (Temperofen) 5 min getempert, dann entformt und für die Weiterverarbeitung entsprechen gelagert.

Die Eigenschaften der auf diese Weise hergestellten Häute sind in Tabelle 1 wiedergegeben.

### Beispiel B:

Die PU-Haut wurde in eine Schäumform mit Deckel gelegt und mit Vakuum glatt an die Wandung gezogen. Der Deckel wurde mit einem Trennmittel auf Wachsbasis (Acmos) eingetrennt und danach ein Einleger auf Kunststoffe oder Metall in der Weise befestigt, daß durch den späteren Schäumvorgang bei geschlossenem Deckel der Schaum eine Einheit mit Haut und Einleger bildete.

In die offene Form wurde unter Zuhilfenahme eines Puromaten - Zweikomponentenmaschine - der Fa. Elastogran Dosiertechnik, ein energieabsorbierender, halbharter Schaum des Typs Elastoflex® E 3320 eingetragen. Elastoflex® E ist ein Zweikomponenten-wassergetriebenes-MDI-System der Fa. Elastogran GmbH, Geschäftsbereich Automobil und Spezialitäten (Schaumeigenschafaten s. Tabelle 2). Durch den geschlossenen Deckel wurde der Schaum in der Form auf eine Wandstärke von 2 cm verdichtet und nach 3 min als komplettes Bauteil aus der geöffneten Form entnommen (Schaumeigenschafaten s. Tabelle 2).

**Tabelle 1**

| Typische Eigenschaften der Sprühhaut: | | | |
|---|---|---|---|
| | | Haut A1 | Haut A2 |
| Raumgewicht | kg/m³ | 1010 | 990 |
| Zugfestigkeit | kPa | 14440 | 11360 |
| Dehnung | % | 780 | 710 |
| Weiterreißfestigkeit | N/mm | 37 | 36 |
| Fogging | mg | 2,2 | 1,5 |
| Wärmeprüfung | 120°C | i.O. | i.O. |

| | | | |
|---|---|---|---|
| Abkürzungen: i.O. = in Ordnung | | | |

**Tabelle 2**

| Typische Eigenschaften des Schaumes B: | | |
|---|---|---|
| Raumgewicht | kg/m³ | 110 |
| Zugfestigkeit | kPa | 320 |
| Dehnung | % | 45 |
| Stauchhärte | kPa | |
| bei 20 % | | 38 |
| bei 40 % | | 61 |
| bei 60 % | | 120 |

## Patentansprüche

1. Verfahren zur Herstellung von Häuten aus Polyurethandispersionen, wobei man
I. eine Form mit einer wässerige Dispersion, enthaltend ein Polyurethan (A), flächig beschichtet, wobei die Form auf ihrer Oberfläche keinen Elektrolyten trägt, der die Koagulation der wässerigen Dispersion, enthaltend ein Polyurethan (A), bewirken würde,
II. den gemäß Schritt (I) hergestellten Film der wässerigen Dispersion, enthaltend ein Polyurethan (A) trocknet, wobei eine einschichtige Haut gebildet wird,
III.gegebenenfalls eine aus mehreren Hautschichten aufgebaute Haut herstellt, indem man die gemäß Schritt II erhaltene mit einer einschichtigen Haut bekleidete Form erneut mit einer wässerige Dispersion, enthaltend ein Polyurethan (A), flächig beschichtet,
IV. den in Schritt (III) neu gebildeten Film der wässerigen Dispersion, enthaltend ein Polyurethan (A), zu einer weiteren Hautschicht trocknet und
V. gegebenenfalls die Schritte (III) und (IV) 5 bis 50 Male wiederholt.

2. Verfahren nach Anspruch 1, wobei man in einem Schritt (VI) auf der Haut auf der Seite, die nicht mit der Oberfläche der Form in Kontakt stand, eine Schicht aus einem Polyurethanschaum (B) aufbringt.

3. Verfahren nach Anspruch 1 oder 2, wobei man die Haut in eine andere verschließbare Form legt und einen Träger mit dem Polyurethanschaum (B) hinterschäumt.

4. Verfahren nach Anspruch den Ansprüchen 1 bis 3, wobei man pro Beschichtungsvorgang (Schritt I oder III) eine solche Menge an wässeriger Dispersion, enthaltend ein Polyurethan (A), aufträgt, daß die jeweilige Hautschicht eine Dicke von 10 µm bis 2 mm aufweist.

5. Verfahren nach den Ansprüchen 1 bis 4, wobei man Häute mit einer Dicke von 10 µm bis 4 mm herstellt.

6. Verfahren nach den Ansprüchen 1 bis 5, wobei das Aufbringen der wässerigen Dispersion, enthaltend ein Polyurethan (A), in Schritt (I) und (III) durch Sprühen erfolgt.

7. Verfahren nach den Ansprüchen 2 bis 6, wobei die Schicht aus Polyurethanschaum (B) eine Dicke von 1 bis 7 mm aufweist.

8. Verfahren nach den Ansprüchen 1 bis 7, wobei man den Polyurethanschaum (B) auf die Oberfläche der Haut aufbringt, indem man eine Polyurethan-Reaktionsmischung, enthaltend ein Treibmittel, auf die Hautoberfläche aufsprüht.

9. Verfahren nach den Ansprüchen 1 bis 8, wobei man als wässerige Dispersionen, enthaltend ein Polyurethan (A), solche einsetzt, bei denen das Polyurethan (A) aufgebaut ist aus
a) Diisocyanaten mit 4 bis 30 C-Atomen,
b) Diolen, von denen
b1) 10 bis 100 mol-%, bezogen auf die Gesamtmenge der Diole (b), ein Molekulargewicht von 500 bis 5000 aufweisen, und
b2) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen und
e) gegebenenfalls von den Monomeren (a) bis (d) verschiedenen einwertigen Verbindungen mit einer reaktiven Gruppen, bei der es sich um eine alkoholische Hydroxylgruppe, eine primäre oder sekundäre Aminogruppen oder eine Isocyanatgruppe handelt.

10. Verfahren nach den Ansprüchen 2 bis 9, wobei man für die Herstellung des Polyurethanschaums ein handelsübliches System zur Erzeugung von Halbhart-Schäumen einsetzt.
